Europäisches Patentamt

European Patent Office

Office européen des brevets

(11) Veröffentlichungsnummer: **0 178 427**
**B1**

(12) **EUROPÄISCHE PATENTSCHRIFT**

(45) Veröffentlichungstag der Patentschrift: 27.12.90

(21) Anmeldenummer: 85110503.1

(22) Anmeldetag: 21.08.85

(51) Int. Cl.⁵: **F 02 M 57/02,** F 02 M 59/36, F 02 M 59/46

(54) Elektrisch gesteuerte Kraftstoffeinspritzpumpe für Brennkraftmaschinen.

(30) Priorität: 14.09.84 DE 3433711
14.06.85 DE 3521425
02.07.85 DE 3523536

(43) Veröffentlichungstag der Anmeldung:
23.04.86 Patentblatt 86/17

(45) Bekanntmachung des Hinweises auf die
Patenterteilung:
27.12.90 Patentblatt 90/52

(84) Benannte Vertragsstaaten:
AT CH DE FR GB IT LI

(56) Entgegenhaltungen:
EP-A-0 076 459
EP-A-0 114 375
DE-A-1 601 984
US-A-1 664 608
US-A-3 810 453
US-A-4 129 253
US-A-4 129 254
US-A-4 392 612

(73) Patentinhaber: ROBERT BOSCH GMBH
Postfach 50
D-7000 Stuttgart 1 (DE)

(72) Erfinder: Eblen, Ewald, Dr. Dipl.-Ing.
Fridinger Strasse 53
D-7000 Stuttgart 75 (DE)
Erfinder: Hofmann, Karl, Ing.
Amselweg 22
D-7148 Remseck 1 (DE)
Erfinder: Holzgrefe, Volker, Dipl.-Ing. (FH)
Hohenstaufenstrasse 26
D-7257 Ditzingen (DE)
Erfinder: Pigeroulet, Jean, Ing.
13 Rue Pascal
F-69100 Villeurbanne (FR)
Erfinder: Rodriguez-Amaya, Nestor, Dipl.-Ing.
Dennerstrasse 70
D-7000 Stuttgart 50 (DE)
Erfinder: Simon, Nikolaus, Dr. Dipl.-Ing.
Obere Ringstrasse 25
D-7016 Gerlingen (DE)
Erfinder: Trachte, Dietrich, Dipl.-Ing.
Rua Viscondessa de Campinas, 251
13100 Campinas Sao Paulo (BR)

Courier Press, Leamington Spa, England.

**EP  0 178 427  B1**

Erfinder: **Weiss, Friedrich, Dipl.-Ing.**
**Alleenstrasse 21**
**D-7015 Korntal-Münchingen 2 (DE)**
Erfinder: **Ziegler, Ewald, Dipl.-Ing. (FH)**
**Beethovenstrasse 6**
**D-7258 Heimsheim (DE)**

## Beschreibung

Stand der Technik

Die Erfindung betrifft eine elektrisch gesteuerte Kraftstoffeinspritzpumpe für Brennkraftmaschinen gemäß dem gattungsbildenden Oberbegriff des Patentanspruchs 1.

Aus der EP—A—O 114 375 ist eine elektrisch gesteuerte Kraftstoffeinspritzpumpe der gattungsgemäßen Bauart bekannt, bei der das in den Überströmkanal eingesetzte und durch Sperren des Überströmkanals die Einspritzdauer bestimmende Überströmventil ein nach innen, zu dem unter Einspritzdruck setzbaren Druckraum hin öffnendes Ventilglied aufweist. Das als Kolbenschieber ausgebildete Ventilglied wird von der als Rückstellfeder wirkenden Druckfeder bei stromlosem elektrischen Stellglied in seiner Schließstellung gehalten. Dabei unterstützt der auf unterschiedlich große Stirnflächen zweier Kolbenschieberbereiche unterschiedlichen Durchmessers wirkende Kraftstoffdruck und ein durch den Leckstrom in den Dichtspalten dieser Kolbenschieberbereiche wirksames Druckgefälle diese Schließkraft. Wegen der durch dieses Druckgefälle bewirkten hydraulischen und durch die Druckfeder erzeugten hohen Schließkraft muß dieses Ventil durch eine entsprechend größere Kraft einer zweiten Feder aufgestoßen werden, so daß hier zwei elektromagnetische Stellglieder notwendig sind, von denen das eine nach Entregen des zugehörigen Magneten einen Leerhub durchläuft, um unter der Kraft der zweiten Feder eine genügend große Aufstoßkraft aufzubringen. Das zweite Stellglied hat dann nur eine Haltefunktion, wodurch der Steuerungs- und Bauraumaufwand, z. B. für eine Pumpedüse, unzulässig hoch ist.

Aus der US—A—4 392612 ist eine Kraftstoffspritzpumpe bekannt, die als Pumpedüse für Dieselmotoren direkt in den Zylinderkopf der zugehörigen Brennkraftmaschine eingebaut wird und in einem gemeinsamen Gehäuse sowohl die mechanisch angetriebene Kraftstoffeinspritzpumpe als auch die zugehörige Einspritzdüse umfaßt. Dort wird ebenfalls die beim Förderhub des Pumpenkolbens aus dem Pumpenarbeitsraum zur Einspritzdüse verdrängte Kraftstoffeinspritzmenge durch die Einschaltdauer eines stromlos offenen, elektromagnetisch betätigten Überströmventils bestimmt, das in einen den Pumpenarbeitsraum mit einem Niederdruckraum verbindenden Überströmkanal eingesetzt ist. Dieses Überströmventil ist allerdings als ein nach außen öffnendes Schieberventil ausgebildet, das nur im geschlossenen Zustand vollkommen druckausgeglichen ist, weil der im Pumpenarbeitsraum unter Einspritzdruck gesetzte Kraftstoff einen von einer Ringnut am Ventilnadelschaft gebildeten und nach außen von der Führungsbohrung begrenzten Druckraum beaufschlagt, so daß keine Axialkräfte wirksam werden können. Wird dieses Ventil jedoch bei entregtem Stellmagneten mit Hilfe einer in Öffnungsrichtung vorgespannten Druckfeder in seine Offenstellung umgeschaltet, dann schießt der sich in den Niederdruckraum entspannende Kraftstoff durch den engen Spalt zwischen dem konischen Ventilsitz und der entsprechenden nach außen sich vergrößernden konischen Schließfläche an dem dem Stellglied abgewandten Endabschnitt der Ventilnadel. Dabei werden zusätzliche, die Öffnungsbewegung unterstützende hydraulische Kräfte wirksam, die jedoch in nachteiliger Weise aufgrund der eingeschnürten Strömung auch Gegenkräfte erzeugen und zu dem bekannten sogenannten "Schnarren" des Ventils führen. Dieses "Schnarren" ist eine leichte Flatterbewegung des Ventilgliedes, die bei Einspritzventilen erwünscht, bei Steuerventilen jedoch nachteilig ist.

Es sind auch Kraftstoffeinspritzpumpen ähnlicher Bauart bekannt, die-wie die gattungsgemäße Einspritzpumpe-anstelle des zuvor beschriebenen, nach außen öffnenden Überströmventils ein nach innen öffnendes Magnetventil zur Steuerung des Förderbeginns und Förderendes aufweisen (US—PS 1 664 608 und 4 129 253). Bei diesen Ventilen muß aber der als elektrisches Stellglied dienende Elektromagnet das ventilglied gegen den zentrisch die Ventilnadelspitze belastenden Einspritzdruck in der Schließstellung festhalten. Dieses Ventil ist nicht druckausgeglichen, und bei hohen Einspritzdrücken ist der Stellmagnet nur dann in der Lage, das Ventil in seiner Schließstellung zu halten, wenn der Sitzdurchmesser extrem klein gewählt wird. Dies wird bei diesen bekannten Kraftstoffeinspritzpumpen durch eine vorgeschaltete Drosselbohrung zwischen Pumpenarbeitsraum und ventilsitz erreicht. Diese Maßnahme hat jedoch den Nachteil, daß auch die Abströmgeschwindigkeit des aus dem Pumpenarbeitsraum bei Einspritzende ausfließenden Kraftstoffes gedrosselt und damit ein gewünschtes scharfes und schnelles Spritzende verhindert wird.

Aus der EP—A—O 076 459 ist außerdem ein schnellschaltendes Magnetventil bekannt, das auch für die Einspritzsteuerung verwendbar ist und durch zwei axial zueinander versetzte Axialluftspalte eine sehr große Schließkraft erzeugt. Auch dieses Ventil hat den Nachteil der bei den vorgenannten Einspritzpumpen verwendeten Ventilausführung, d. h. es ist im geschlossenen Zustand durch den auf die Ventilsitzfläche wirkenden Einspritzdruck nicht druckausgeglichen und somit nur bis zu einer begrenzten Druckhöhe, z. B. für die Steuerung einer Benzineinspritzpumpe, oder zur Steuerung extrem kleiner Einspritzmengen einsetzbar.

Ziel der Erfindung ist es nun, Kraftstoffeinspritzpumpen der eingangs genannten Bauart zur exakten, zeitgenauen Steuerung des Förderbeginns und Förderendes mit einem schnellschaltenden Überströmventil auszurüsten, das die vorgenannten Nachteile nicht aufweist für die Hochdruckdieseleinspritzung eingesetzt werden kann und eine gedrängte Bauweise ermöglicht.

Vorteil der Erfindung

Bei der erfindungsgemäßen Kraftstoffeinspritzpumpe wird durch die Kombination der kennzeichnenden Merkmale des Patentanspruchs 1 bei dem als nach innen öffnendes, stromlos offenes Nadelventil ausgebildeten Überströmventil die Öffnungsbewegung des als Ventilnadel ausgebildeten Ventilgliedes durch die an der Nadelspitze angreifenden hydraulischen Kräfte unterstützt, das Ventilglied ohne Neigung zu Flatterbewegungen in der Offenstellung gehalten und unter Vermeidung ungewollter, beim Schließen des Ventils in Öffnungsrichtung wirkender hydraulischer Kräfte eine schnelle, aber gedämpfte Schließbewegung erzielt. Dazu ist die das Ventilglied bildende ventilnadel des als stromlos offenes Nadelventil ausgebildeten Überströmventils von der Druckfeder in Öffnungsrichtung vorgespannt, und durch die an der stirnseitigen Nadelspitze angebrachte ringnutförmige Einschnürung ist der unter Einspritzdruck setzbare Druckraum zur Beeinflussung der Strömung des Kraftstoffes anpaßbar. Dadurch wird die zu bewegende Masse des Ventilgliedes verringert, was sich günstig auf die erreichbare kurze Schaltzeit auswirkt. Außerdem ist die Nadelspitze mit einem rotationssymmetrischen Ansatz versehen, der in den niederdruckseitigen ersten Abschnitt des Überströmkanals hineinragt und ein Federwiderlager der Druckfeder trägt. Dadurch kann die Druckfeder ohne Rücksicht auf andere Ventilbauteile optimal bezüglich Federdrahtstärke und Windungsdurchmesser ausgelegt werden. So kann auf kleinstem Bauraum eine harte Feder mit geringer Anfangs aber hoher Endkraft und geringer Masse untergebracht werden, die gut zugänglich und einstellbar ist und die Öffnungsbewegung des Ventilgliedes in gewünschter Weise unterstützt. Des weiteren wird durch den nur wenige Zehntel Millimeter breiten konischen Ventilsitz ein unzulässig hoher Staudruck im Sitzbereich vermieden und zugleich verhindert, daß beim Schließen des Ventils sich entsprechend der wirksamen Ringfläche am Ventilsitz zu große, in Öffnungsrichtung wirkende hydraulische Kräfte aufbauen. Schließlich ist es erforderlich, daß der Durchmesser der genau definierten Dichtkante entweder bei vollständigem Druckausgleich — wie aus der eingangs zitierten EP—A—O 114 375 bekannt — gleich dem Führungsdurchmesser oder in bevorzugter Weise — bei gewünschtem, nur teilweisem Druckausgleich — geringfügig kleiner ist als der Führungsduurchmesser des Führungsschaftes an der Ventilnadel. Eine solche genau abgestimmte, äußerst kleine Druckstufe am Ventilnadelschaft kann die in Öffnungsrichtung wirkende Druckfeder zur Beschleunigung der Öffnungsbewegung der Ventilnadel unterstützen.

Durch die in den Unteransprüchen aufgeführten Maßnahmen und Merkmale sind vorteilhafte Ausgestaltungen und Weiterbildungen der im Patentanspruch 1 angegebenen Kraftstoffeinspritzpumpe erzielbar. So sind durch den entsprechend den kennzeichnenden Merkmalen des Anspruchs 2 hohlgebohrten Führungschaft des Ventilgliedes und den zentrisch wirkenden Hubanschlag die bewegten Massen des Ventilgliedes noch stärker verkleinert worden, was zusätzlich zur Erreichung der erforderlichen, extrem kurzen Schaltzeit beiträgt. Der Hubanschlag kann gemäß Anspruch 3 in vorteilhafter Weise bezüglich seines wirksamen Durchmessers und der aufeinandertreffenden Flächen optimiert werden, wobei eine hydraulische Aufscblagdämpfung durch planparallele oder leicht hohlgeschliffene Berührungsflächen erzielbar ist.

Zeichnung

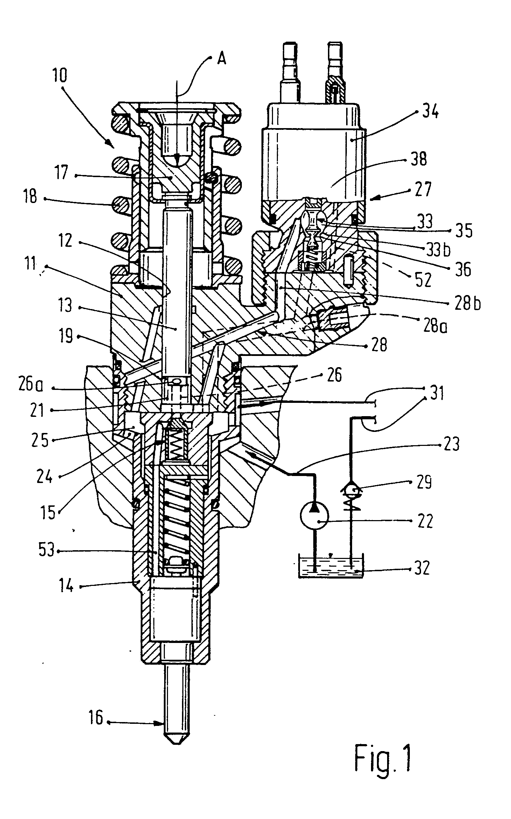

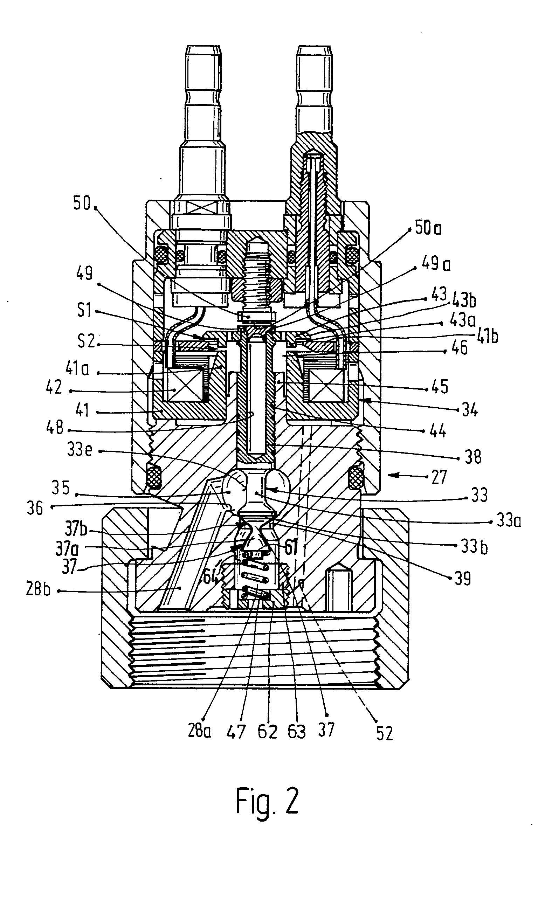

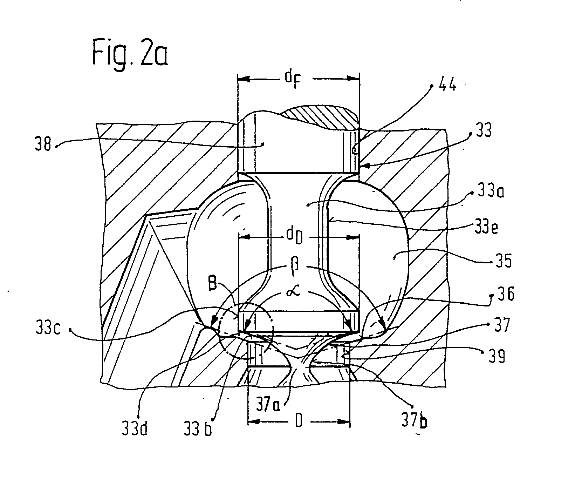

Ein Ausführungsbeispiel der erfindungsgemäß ausgestalteten Kraftstoffeinspritzpumpe ist in der Zeichnung dargestellt und wird anschließend näher beschrieben. Es zeigt Figur 1 einen Längsschnitt durch das als Pumpedüse ausgestaltete Ausführungsbeispiel, Figur 2 einen Längsschnitt durch das den Förderbeginn und die Fördermenge steuernde Überströmventil in vergrößerter Darstellung und Figur 2a einen in vergrößertem Maßstab dargestellten Ausschnitt aus Figur 2 im Bereich des Ventilsitzes.

Beschreibung des Ausführungsbeispiels

Die in Figur 1 dargestellte elektrisch gesteuerte Kraftstoffeinspritzpumpe ist eine in nicht näher dargestellter, jedoch bekannter Weise von einer Nockenwelle mechanisch angetriebene Pumpedüse 10, deren mit 11 bezeichnetes Pumpengehäuse einen mit konstantem Hub angetriebenen und in einem Pumpenzylinder 12 geführten Pumpenkolben 13 aufnimmt und stirnseitig eine mittels einer Schraubhülse 14 unter Zwischenschaltung eines Druckventils 15 befestigte Einspritzdüse 16 bekannter und deshalb nicht näher dargestellter Bauart trägt. Der Pumpenkolben 13 wird von bekannten, deshalb nur durch einen Pfeil A angedeuteten Antriebsmitteln über einen Pumpenstößel 17 entgegen der Rückstellkraft einer Stößelfeder 18 angetrieben. Er begrenzt mit seiner Stirnfläche 19 einen im Pumpenzylinder 12 befindlichen Pumpenarbeitsraum 21, der einspritzdüsenseitig vom Druckventil 15 abgeschlossen und über einen Druckkanal 53 mit der Einspritzdüse 16 verbindbar ist.

Dem Pumpenarbeitsraum 21 wird in der gezeichneten äußeren Totpunktlage des Pumpenkolbens 13 von einer Förderpumpe 22 unter niedrigem Zulaufdruck von z.B. 4 bar stehender Kraftstoff zugeführt. Dieser Kraftstoff gelangt dabei von der Förderpumpe 22 über eine Förderleitung 23 und mindestens eine Öffnung 24 in der Wand der Schraubhülse 14 in einen das Druckventil 15 umgebenden Niederdruckraum 25 innerhalb der Schraubhülse 14 und von dort über einen Zulaufkanal 26 und deren Zulauföffnung 26a in den Pumpenarbeitsraum 21. Der Niederdruckraum 25 und der Pumpenarbeitsraum 21 sind außerdem über einen von einem Überströmventil 27 steuerbaren Überströmkanal 28 in der gezeichneten Offenstellung dieses. Ventils miteinander verbunden.

Der Zulaufdruck des dem Niederdruckraum 25 von der Förderpumpe 22 über die Förderleitung 23 zugeführten Kraftstoffes ist durch ein Druckbegrenzungsventil 29 bestimmt, das in eine Rücklaufleitung 31 eingesetzt ist Diese Rücklaufleitung 31 ist als Teil einer zu den weiteren Pumpedüsen der gleichen Brennkraftmaschine führenden Ringleitung unter brochen gezeichnet und führt letztlich den überschüssigen Kraftstoff zu einem Tank 32 zurück.

Das als 2/2-Wegeventil arbeitende Überströmventil 27 ist ein Magnetventil, das in Figur 1 zur Darstellung seiner Steuerfunktion nur teilweise geschnitten eingezeichnet und zur Darstellung seiner einzelnen Bauteile jedoch in den Figuren 2 und 2a in vergrößertem Maßstab gezeichnet ist.

Das Überströmventil 27 ist als Nadelventil ausgebildet, dessen Ventilglied 33 durch ein von einem Elektromagneten gebildetes elektrisches Stellglied 34 betätigt wird und im Bereich seines dem Stellglied 34 abgewandten Endabschnittes 33a von einem Druckraum 35 umgeben ist. Dieser Druckraum 35 ist einerseits über einen gestrichelt in Figur 1 eingezeichneten ersten Abschnitt 28a des Überströmkanals 28 mit dem Niederdruckraum 25 verbindbar und andererseits über einen zweiten Abschnitt 28b des Überströmkanals 28 dauernd mit dem Pumpenarbeitsraum 21 verbunden. Die in Figur 1 offene Verbindung vom Druckraum 35 zum Niederdruckraum 25 trägt am Übergang vom Druckraum 35 zu dem ersten Abschnitt 28a des Überströmkanals 28 einen von einer konischen Schließfläche 33b am Endabschnitt 33a des Ventilgliedes 33 verschließbaren konischen Ventilsitz 36. Das als nach innen, zu dem unter Einspritzdruck setzbaren Druckraum 35 hin öffnende Ventilnadel ausgebildete Ventilglied 33 trägt abströmseitig an seinem Endabschnitt 33a eine Nadelspitze 37, die radial von der konischen Schließfläche 33b begrenzt ist.

Die Nadelspitze 37 weist im Anschluß an die Schließfläche 33b einen rotationssymmetrischen Ansatz 37a auf, der mit einer eine Unterstützung der Nadelhubbewegung in Öffnungsrichtung bewirkenden strömungsleitenden Außenkontur 37b in Form eines konkaven Kegelmantels versehen ist (siehe Figur 2a). Bei der Direkteinspritzung von Dieselbrennkraftmaschinen treten sehr hohe, über 1000 bar liegende Einspritzdrücke auf. Damit das Überströmventil 27 diese hohen Drückeeinwandfrei beherrscht, wird das vorstehend beschriebene, elektromagnetisch betätigte und nach innen öffnende Nadelventil zur Sperrung des aus dem Pumpenarbeitsraum 21 abfließenden Kraftstoffes eingesetzt. Dieses Ventil arbeitet nur einwandfrei, wenn es folgende Bedingungen erfüllt (siehe dazu Figur 2a):

a) Der Kegelwinkel α der konischen Schließfläche 33b am Endabschnitt 33a des Ventilgliedes 33 ist größer als der Kegelwinkel β des zugehörigen, sich zum Druckraum 35 hin konisch erweiternden Ventilsitzes 36, und um beikleinen Ventilhüben einen großen Durchgangsquerschnitt zu erhalten, wird ein sehr flacher Kegelwinkel α von z. B. 140° gewählt;

b) die Schließfläche 33b bildet mit einer angrenzenden zylindrischen Mantelfläche 33c am Endabschnitt 33a des Ventilgliedes 33 eine Dichtkante 33d, deren Durchmesser $d_D$ gleich oder nur geringfügig kleiner ist als der Führungsdurchmesser $d_F$ eines den Endabschnitt 33a des Ventilgliedes 33 mit dem Stellglied 34 verbindenden Führungsschaftes 38;

c) der konische Ventilsitz 36 weist eine nur wenige Zehntel Millimeter breite, von der Schließfläche 33b an der Nadelspitze 37 der Ventilnadel 33 im geschlossenen Zustand des Überströmventils 27 abgedeckte wirksame Sitzfläche auf, die nach innen, zur Nadelspitze 37 hin vom Durchmesser D einer Durchströmöffnung 39 begrenzt ist.

Durch die Verwendung dieser sehr schmalen wirksamen Sitzfläche wird der Durchströmquerschnitt nicht unzulässig stark eingeschnürt und eine ungewollte Abströmdrosselung verhindert. Das Überströmventil 27 ist im geschlossenen Zustand völlig bzw. bei Durchmesserunterschieden zwischen den Durchmessern $d_F$ und $d_D$ nahezu völlig druckausgeglichen.

Als weitere Maßnahme zur Unterstützung der notwendigen schnellen Öffnungsbewegung hat es sich als vorteilhaft herausgestellt, wenn noch die nachfolgende Bedingung erfülltwerden.

d) die zu a) genannte Sitzwinkeldifferenz α - β ist sehr klein und liegt im Bereich von 0,5°, um bereits am Hubanfang eine möglichst große, bei Durchströmung des Ventils in Öffnungsrichtung wirkende hydraulische Kraft zu erzielen und um eine hydraulische Dämpfung beim Aufsetzen des Ventilgliedes 33 auf seinen Ventilsitz 36 am Ende der Schließbewegung zu erreicben;

e) durch die zu Figur 2a näher beschriebene, mit einer strömungsleitenden Außenkontur 37b versehene Nadelspitze 37 werden zusätzliche, in Öffnungsrichtung wirksame Kräfte in das Ventilglied 33 eingeleitet.

Das von einem Hubmagneten gebildete elektrische Stellglied 34 (siehe hierzu Figur 2) weist eine von einem Kern 41 aufgenommene Leiterspule 42 und einen am Führungsschaft 38 des Ventilgliedes 33 befestigten tellerförmigen Anker 43 auf. Der die Leiterspule 42 enthaltende Kern 41 des Stellgliedes 34 umgibt einen eine Führungsbohrung 44 für den Führungsschaft 38 des Ventilgliedes 33 enthaltenden Gehäuseabschnitt 45 und bildet mit einem innerhalb der Leiterspule 42 liegenden inneren Kernabschnitt 41a, der einem axial vorstehenden zylindrischen Stutzen 43a am Anker 43 gegenüberliegt, einen ersten Axialluftspalt $S_1$. Ein die Leiterspule 42 außen und auch stirnseitig teilweise umfassender äußerer Kernabschnitt 41b bildet zusammen mit einem Randbereich 43b des Ankers 43 einen zweiten Axialluftspalt $S_2$. Beide Axialluftspalte $S_1$ und $S_2$ weisen sowohl einen radialen als auch einen axialen Abstand zueinander auf, könnten bei entsprechend abgeänderter Form der beiden Kernabschnitte 41a und 41b aber auch in einer Ebene liegen.

Ein radial vom Führungsschaft 38 des Ventilgliedes 33, vom zylindrischen Stutzen 43a des Ankers 43 und vom inneren Kernabschnitt 41a des Kernes 41 und axial vom Anker 43 und vom Gehäuseabschnitt 45 umgrenzter Hohlraum ist mit 46 bezeichnet.

Um das Gewicht der bewegten Massen zu reduzieren, ist der mit engem Spiel in der Führungsbohrung 44 geführte Führungsschaft 38 des Ventilgliedes 33 von seinem stellgliedseitigen Ende her mit einer einen Hohlraum bildenden Sacklochbohrung 48 versehen, die durch einen gehärteten, einen Hubanschlag für das Ventilglied 33 bildenden Stopfen 49 verschlossen ist, der bei in Offenstellung stehendem Ventilglied 33 an einem einstellbaren Gegenanschlag 50 anliegt. Dieser Gegenanschlag 50 ist von einer lagegesichert eingeschraubten Anschlagschraube gebildet, dessen Stirnfläche 50a wie auch die Stirnfläche 49a des gehärteten Stopfens 49 plangeschliffen oder konkav bzw. leicht hohlgeschliffen ist, um so auch eine hydraulische Hubdämpfung zu erzielen. Wegen der zentrisch liegenden Anschläge können sowohl der Durchmesser als auch die Form der aufeinandertreffenden Flächen optimal für eine entsprechende Hubdämpfung ausgelegt werden. Falls der Gegenanschlag 50 von außen einstellbar sein soll, kann er auch nach außen hin durchgeführt und dort gesichert und abgedichtet werden.

Die den Kern 41 mit Leiterspule 42 und den Anker 43 aufnehmenden Bauräume sind über eine Entlastungsbohrung 52 (siehe Figur 2 und andeutungsweise auch Figur 1) mit der Niederdruckseite des Ventils verbunden, die an den mit dem Niederdruckraum 25 verbundenen ersten Abschnitt 28a des Überströmkanals 28 angeschlossen ist.

Eine ringnutartige Einschnürung 33e am Endabschnitt 33a des Ventilgliedes 33 zwischen seinem Führungsschaft 38 und der die Schließfläche 33b tragenden Nadelspitze 37 vergrößert das Volumen des Druckraums 35, hat auch eine strömungsleitende Funktion und verringert die zu bewegende Masse des Ventilgliedes 33.

Das Ventilglied 33 des in geschlossenem Zustand dargestellten Überströmventils 27 ist durch eine Druckfeder 47 in Öffnungsrichtung vorgespannt, die stirnseitig an der Nadelspitze 37 des Ventilgliedes 33 angreift. Dazu weist der Ansatz 37a an der Nadelspitze 37 einen ein erstes Federwiderlager für die Druckfeder 47 bildend Absatz 61 auf. Ein zweites Federwiderlager 62 für die Druckfeder 47 ist in dem ersten Abschnitt 28a des Überströmkanals 28 eingesetzt. Das zweite Federwiderlager 62 hat die Form einer flachen Ringschraube, durch die eine zur Einstellung der Federvorspannung in verschiedenen Längen bereitgestellte Abstandshülse 63 in einem erweiterten Abschnitt einer Längsbohrung 64 befestigt ist. Die Längsbohrung 64 ist Teil des ersten Abschnittes 28a des Überströmkanals 28. Die Außenkontur 37b der Nadelspitze 37 hat eine strömungsleitende Funktion.

Die Wirkungsweise der vorstehend beschriebenen Kraftstoffeinspritzpumpe ist folgende:

Beginnt der Pumpenkolben 13, ausgehend von seiner in Figur 1 dargestellten äußeren Totpunktlage seinen Druckhub, dann wird der von der Förderpumpe 22 dem Pumpenarbeitsraum 21 zugeführte Kraftstoff beim ersten Hubteil sowohl über den Zulaufkanal 26 als auch über den bei stromlosem Überströmventil 27 offenen Überströmkanal 28 in den Niederdruckraum 25 zurückgedrückt. Nach Verschließen der Zulauföffnung 26a des Zulaufkanals 26 wird so lange noch Kraftstoff über den Überströmkanal 28 verdrängt, bis zur Einleitung des wirksamen Förderbeginns das Überströmventil 27 mittels des Ventilgliedes 33 seinen Ventilsitz 36 abschließt. Der jetzt schlagartig sich im Pumpenarbeitsraum 21 aufbauende Kraftstoffdruck öffnet das Druckventil 15, und der Kraftstoff wird über den Druckkanal 53 zur Einspritzdüse 16 gefördert.

Von dort gelangt er nach Überwindung des Ventilöffnungsdruckes der Einspritzdüse 16 in bekannter Weise in den Brennraum der Brennkraftmaschine.

Zur Beendigung der Kraftstofförderung wird die Stromzufuhr zum Stellglied 34 des Überströmventils 27 entsprechend den in einem elektronischen Regelgerät ermittelten Betriebsdaten abgeschaltet. Das Überströmventil 27 wird dabei durch seine Druckfeder 47 und vor allem durch den Druck des im Druckraum 35 befindlichen Kraftstoffs in seine in Figur 1 und Figur 2a gezeichnete Offenstellung umgeschaltet. Dadurch fällt der Druck im pumpenarbeitsraum 21 schlagartig ab, und die Einspritzdüse 16 und das Druckventil 15. schließen, so daß die Einspritzung beendet ist.

Für eine schnelle Beendigung der Kraftstofförderung hat es sich als besonders wichtig herausgestellt, daß die Öffnungskraft der Druckfeder 47 durch den hydraulischen Druck des abströmenden Kraftstoffs unterstützt wird. Dies wird durch die spezielle Ausgestaltung der an der Nadelspitze 37 befindlichen strömungsleitenden Außenkontur 37b erreicht (siehe Figur 2a).

Durch die gewählte Bauart des Überströmventils 27 werden sehr kurze, exakt steuerbare Einspritzzeiten auch bei sehr hohen Einspritzdrücken erreicht, wie sie gerade für Direkteinspritzmotoren erforderlich sind. Das bevorzugte Ausführungsbeispiel in Figur 1 ist eine Pumpedüse, selbstverständlich können die erfindungsgemäßen Merkmale auch bei Einzel- oder Reiheneinspritzpumpen verwirklicht werden, bei denen jedem Pumpenelement ein Überströmventil 27 zugeordnet ist. Das gleiche gilt auch für Verteilereinspritzpumpen, bei denen dann ein einziges, zentrales Überströmventil der vorgeschlagenen Bauart die Kraftstofförderung zu den vom Verteiler gesteuerten Auslässen bzw. Druckleitungen steuert.

## Patentansprüche

1. Elektrisch gesteuerte Kraftstoffeinspritzpumpe für Brennkraftmaschinen, insbesondere für einen Dieselmotor,

mit mindestens einem mit konstantem Hub angetriebenen Pumpenkolben (13), der einen Pumpenarbeitsraum (21) begrenzt und beim Förderhub den in diesen Pumpenarbeitsraum von einer Förderpumpe (22) unter Zulaufdruck zugeführten Kraftstoff unter Einspritzdruck zu einer Einspritzdüse (16) fördert, solange ein von einem elektrischen Stellglied (34) betätigtes Ventilglied (33) eines Überströmventils (27) den Durchfluß des ansonsten vom Pumpenarbeitsraum (21) über einen Überströmkanal (28) zu einem Niederdruckraum (25) überströmenden Kraftstoffes sperrt,

mit einen Kern (41) und eine Leiterspule (42) sowie einen Anker (43) aufnehmenden Bauräumen im Überströmventil (27),

mit einem das ventilglied (33) im Bereich eines Endabschnittes (33a) umgebenden Druckraum (35),

mit einem in einer Führungsbohrung (44) geführten Führungsschaft (38) am Ventilglied (33), das durch eine Druckfeder (47) vorgespannt ist,

mit einem von einer konischen Schließfläche (33b) verschließbaren konischen Ventilsitz (36) am Übergang vom Druckraum (35) zu einem mit dem Niederdruckraum (25) verbundenen ersten Abschnitt (28a) des Überströmkanals (28), wobei das Überströmventil (27) zwischen diesem ersten Abschnitt und einem den Druckraum (35) dauernd mit dem pumpenarbeitsraum (21) verbindenden zweiten Abschnitt (28b) des Überströmkanals (28) eingesetzt ist, das Ventilglied (33) des Überströmventils (27) sich nach innen, zu dem unter Einspritzdruck setzbaren Druckraum (35) hin öffnet und der Kegelwinkel ($\alpha$) der radialen konischen Schließfläche (33b) größer ist als der Kegelwinkel ($\beta$) des zugehörigen, sich zum Druckraum (35) hin konisch erweiternden Ventilsitzes (36), wobei die Schließfläche (33b) mit einer angrenzenden zylindrischen Mantelfläche (33c) am Endabschnitt (33a) des Ventilgliedes (33) eine genau definierte Dichtkante (33d) bildet und der konische Ventilsitz (36) eine schmale, von der Schließfläche (33b) des Ventilgliedes (33) im geschlossenen Zustand des Überströmventils (27) abgedeckte, hydraulisch wirksame Sitzfläche aufweist, die nach innen vom Durchmesser (D) einer Durchströmöffnung (39) im ersten Abschnitt (28a) des Überströmkanals (28) begrenzt ist, und wobei die Sitzwinkeldifferenz ($\alpha - \beta$) der beiden Kegelwinkel ($\alpha$, $\beta$) sehr klein ist, dadurch gekennzeichnet, daß das Überströmventil (27) ein stromlos offenes Nadelventil ist, dessen Ventilglied (33) als eine von der Druckfeder (47) in Öffnungsrichtung vorgespannte Ventilnadel ausgebildet ist und stirnseitig an seinem vom Stellglied (34) abgewandten Endabschnitt (33a) eine die Schließfläche (33b) tragende Nadelspitze (37) aufweist, wobei der Endabschnitt (33a) über den mit engem Spiel in der Führungsbohrung (44) geführten Führungsschaft (38) mit dem Stellglied (34) verbunden ist, zwischen dem Führungsschaft (38) und der an die Schließfläche (33b) angrenzenden Mantelfläche (33c) der Nadelspitze (37) eine das Volumen des Druckraums (35) vergrößernde ringnutförmige Einschnürung (33e) vorhanden ist und die den Kern (41) mit der Leiterspule (42) und den Anker (43) aufnehmenden Bauräume über eine Entlastungsbohrung (52) mit dem Niederdruckraum (25) verbunden sind, daß die radial von der Dichtkante (33d) begrenzte Nadelspitze (37) in den mit dem Niederdruckraum (25) verbundenen ersten Abschnitt (28a) des Überströmkanals (28) mit einem rotationssymmetrischen Ansatz (37a) hineinragt, der stirnseitig ein erstes Federwiderlager (61) für die Druckfeder (47) aufweist, wobei ein zweites Federwiderlager (62) für die Druckfeder (47) in den ersten Abschnitt (28a) des Überströmkanals (28) eingesetzt ist, daß die schmale, von der Schließfläche (33b) an der Nadelspitze (37) des Ventilgliedes (33) abgedeckte, hydraulisch wirksame Sitzfläche nur wenige Zehntel Millimeter breit ist und daß der Durchmesser ($d_D$) der Dichtkante (33d) am Endabschnitt (33a) des ventilgliedes (33) gleich dem Führungsdurchmesser ($d_F$) des Führungsschaftes (38) oder nur geringfügig kleiner ist als dieser.

2. Kraftstoffeinspritzpumpe nach Anspruch 1, dadurch gekennzeichnet, daß der Führungsschaft (38) des Ventilgliedes (33) von seinem stellgliedseitigen Ende her mit einer einen Hohlraum bildenden Sacklochbohrung (48) versehen ist, die durch einen gehärteten, einen Hubanschlag für das Ventilglied (33) bildenden Stopfen (49) verschlossen ist, der bei in Offenstellung stehendem Ventilglied (33) an einem, gegebenenfalls von außen, einstellbaren Gegenanschlag (50) anliegt.

3. Kraftstoffeinspritzpumpe nach Anspruch 2, dadurch gekennzeichnet, daß die einander gegenüberliegenden Stirnflächen (49a, 50a) des den Hubanschlag des ventilgliedes (33) bildenden Stopfens (49) und des zugehörigen Gegenanschlages (50) als planparallele oder konkav, bzw. leicht hohlgeschliffene Berührungsflächen ausgebildet sind.

**Revendications**

1. Pompe d'injection de carburant, à commande électrique pour moteurs à combustion interne notamment pour un moteur Diesel,

comportant au moins un piston de pompe (13) entraîné suivant une course constante, et délimitant la chambre (21) de la pompe et dont la course de transfert assure le transfert du carburant fourni à la pression d'arrivée sous la pression d'injection d'une buse d'injection (16), en bloquant suffisamment longtemps un élément de soupape (33) actionné à partir de l'organe de réglage électrique (34) d'une soupape de débordement (27) pour bloquer le passage de la chambre de travail (21) de la pompe pour avoir un débordement par un canal de débordement (28) jusqu'à une chambre basse pression (25) avec passage du carburant,

un noyau (41) et une bobine-conductrice (42) ainsi qu'un induit (43) reçus dans des cavités de la soupape de débordement (27),

un élément de vanne (33) entouré au niveau de son segment d'extrémité (33a) par une chambre de pression (35),

un axe de guidage (48) guidé dans un alésage (44) de l'organe de soupape (33) précontraint par un ressort de compression (47),

avec un siège de soupape (36) conique, susceptible d'être fermé par une surface d'obturation (33b), conique, siège prévu à la transition entre la chambre de pression (35) et un premier segment (28a) du canal de débordement (28) relié à la chambre basse pression (25), la soupape de débordement (27) étant prévue entre ce premier segment et un second segment (28b) du canal de débordement (28) reliant en permanence la chambre de pression (35) et la chambre de la pompe (21), l'organe de soupape (33) du canal de débordement (27) s'ouvrant vers l'intérieur, vers une chambre de pression (35) susceptible d'être mise à la pression d'injection et l'angle au sommet du cône (α) de la surface d'obturation (33b) conique, radiale, est supérieur à l'angle du cône (β) du siège de soupape (36) correspondant, allant en s'évasant de manière conique vers la chambre de pression (35), la surface d'obturation (33b) ayant une surface-enveloppe (33c), cylindrique, adjacente au segment d'extrémité (33a) de l'élément de soupape (33) pour former un bord d'étanchéité (33d) défini de manière précise et le siège de soupape (36), conique forme une surface de siège, étroite, recouvrant la surface d'obturation (33b) de l'élément de soupape (33) à l'état fermé de la soupape de débordement (27), et agissant hydrauliquement, surface qui est délimitée vers l'intérieur par le diamètre (D) d'un orifice de passage (39) du premier segment (28a) du canal de débordement (28) et la différence de l'angle des sièges (α-β) des deux angles de cône (α,β) est très faible, injecteur caractérisé en ce que la soupape de débordement (27) est une soupape à aiguille, ouverte en l'absence de courant, dont l'organe de soupape (33) est une aiguille de soupape précontrainte dans le sens de l'ouverture à partir d'un ressort de compression (47) et cette aiguille est munie frontalement à son segment d'extrémité (33a) opposé à l'organe de réglage (34), une pointe d'aiguille (37) portant la surface d'obturation (33b), le segment d'extrémité (33a) étant relié à l'organe de réglage (34) par l'intermédiaire du jeu étroit de l'axe de guidage traversant le perçage de guidage (44), et entre l'axe de guidage (38) et la surface-enveloppe (33c) de la pointe d'aiguille (37) adjacente à la surface d'obturation (33b), il est prévu un rétrécissement annulaire (33e) augmentant le volume de la chambre de pression (35) et les cavités recevant le noyau (41) ainsi que la bobine directrice (42) et l'induit (43) sont reliées à la chambre basse pression (25) par l'intermédiaire d'un perçage de décharge (52), en ce que la pointe d'aiguille (37) délimitée radialement par l'arête d'étanchéité (33d) pénètre dans le premier segment (28a) relié à la chambre basse pression (25), appartenant au canal de débordement (28) par un épaulement (37a) présentant une symétrie de rotation, épaulement qui présente en face frontale un premier appui à ressort (61) pour le ressort de compression (47), un second contre-appui (62) étant prévu pour le ressort de compression dans le premier segment (28a) du canal de débordement (28), la surface de siège étroite, active hydrauliquement, recouverte par la surface de siège (33b) de la pointe d'aiguille (37) de l'élément de soupape (33) et présentant un effet hydraulique, ne présente une largeur de seulement quelques dixièmes de millimètre et le diamètre ($d_D$) de l'arête d'étanchéité (33d) au segment d'extrémité (33a) de l'élément de siège (33) est égal ou légèrement inférieur au diamètre de guidage ($d_F$) de l'axe de guidage (38) pour le segment d'extrémité (33a) de l'élément de soupape (33) est égal au diamètre de guidage de l'axe de guidage (38) ou légèrement plus faible que celui-là.

2. Pompe d'injection de carburant selon la revendication 1, caractérisée en ce que l'axe de guidage (38) de l'élément de soupape (33) est muni partant de son extrémité située du côté de l'organe de réglage, d'un trou borgne (48) formant une cavité qui est fermée par un bouchon (49) durci, formant une butée de course pour l'élément de soupape (33), bouchon qui s'applique sur un contre-appui (50), également réglable de l'extérieur, et qui en position d'ouverture est relié à l'organe de soupape (33).

3. Pompe d'injection de carburant selon la revendication 2, caractérisée en ce que les surfaces frontales en regard (49a, 50a) du bouchon (49) formant la butée de course de l'organe de soupape (33) et le contre-appui correspondant (50) sont des surfaces de contact planes, parallèles ou concaves ou encore légèrement meulées en creux.

**Claims**

1. Electrically controlled fuel injection pump for internal combustion engines, in particular for a diesel engine,
having at least one pump plunger (13), which is driven with a constant stroke, delimits a pump working space (21) and, during the delivery stroke, delivers the fuel fed into this pump working space under feed pressure by a feed pump (22) under injection pressure to an injection nozzle (16) for as long as a valve member (33) of a spill valve (27), said valve member being actuated by an electric actuator (34), blocks the flow of the fuel otherwise spilling over from the pump working space (21) to a low-pressure space (25) via a spill passage (28),
having installation spaces in the spill valve (27) which accommodate a core (41) and a conductor coil (42) and an armature (43),
having a pressure space (35) surrounding the valve member (33) in the region of an end section (33a),
having a guiding shank (38), guided in a guide bore (44), on the valve member (33), which is prestressed by a compression spring (47),
having a conical valve seat (36), sealable by a conical closing surface (33b), at the transition from the pressure space (35) to a first section (28a), connected to the low-pressure space (25), of the spill passage (28), the spill valve (27) being inserted between this first section and a second section (28b) of the spill passage (28), which second section connects the pressure space (35) permanently to the pump working space (21), the valve member (33) of the spill valve (27) opening inwards towards the pressure space (35), which can be put under injection pressure, and the cone angle (α) of the radial, conical closing surface (33b) being larger than the cone angle (β) of the associated valve seat (36), which widens conically towards the pressure space (35), the closing surface (33b) forming with an adjoining cylindrical lateral surface (33c) on the end section (33a) of the valve member (33) a precisely defined sealing edge (33d) and the conical valve seat (36) having a narrow, hydraulically active seating surface which is covered by the closing surface (33b) of the valve member (33) in the closed state of the spill valve (27) and is bounded towards the inside by the diameter (D) of a throughflow opening (39) in the first section (28a) of the spill passage (28), and the seating angle difference (α — β) of the two cone angles (α, β) being very small, characterized in that the spill valve (27) is a needle valve open when de-energized, the valve member (33) of which is designed as a valve needle prestressed in the opening direction by the compression spring (47) and, on the front face of its end section (33a) turned away from the actuator (34), has a needle point (37) bearing the closing surface (33b), the end section (33a) being connected to the actuator (34) via the guiding shank (38) guided with narrow clearance in the guide bore (44), a neck (33e) having the form of an annular groove and enlarging the volume of the pressure space (35) being present between the guiding shank (38) and the lateral surface (33c), adjoining the closing surface (33b), of the needle point (37), and the installation spaces accommodating the core (41), together with the conductor coil (42), and the armature (43) being connected to the low-pressure space (25) via a relief bore (52), in that the needle point (37) radially bounded by the sealing edge (33d) protrudes into the first section (28a) of the spill passage (28), which section is connected to the low-pressure space (25), with a rotationally symmetrical stud (37a) which, on the front face, has a first spring abutment (61) for the compression spring (47), a second spring abutment (62) for the compression spring (47) being inserted into the first section (28a) of the spill passage (28), in that the narrow, hydraulically active seating surface covered by the closing surface (33b) on the needle point (37) of the valve member (33) is only a few tenths of a millimetre wide and in that the diameter $(d_D)$ of the sealing edge (33d) on the end section (33a) of the valve member (33) is equal to the guiding diameter $(d_F)$ of the guiding shank (38) or is only slightly smaller than the latter.

2. Fuel injection pump according to Claim 1, characterized in that the guiding shank (38) of the valve member (33) is provided, starting from its end on the actuator side, with a blind bore (48) which forms a cavity and is sealed by a hardened plug (49) which forms a stroke stop for the valve member (33) and, with the valve member (33) in the open position, rests against a counterstop (50) adjustable, if required, from outside.

3. Fuel injection pump according to Claim 2, characterized in that the mutually opposite front faces (49a, 50a) of the plug (49) forming the stroke stop of the valve member (33), and of the associated counterstop (50) are designed as plane-parallel or concave- or slightly hollow-ground contact surfaces.

Fig.1

Fig. 2

## Fig. 2a